# EUROPEAN PATENT APPLICATION

(11) **EP 1 295 774 A1**
(43) Date of publication of application: **26.03.2003**
(21) Application number: 01941232.9
(22) Date of filing: 25.06.2001
(51) Int. Cl.: B61F 5/24, B61K 13/00

(54) **RIDE QUALITY SIMULATOR FOR RAILWAY**

(30) Priority: 30.06.2000 JP 2000198774
(71) Applicant: Central Japan Railway Company, Nagoya-shi, Aichi 450-6101 (JP)
(72) Inventor: HASHIMOTO, Atsushi, Central Japan Railway Company, Nagoya-shi, Aichi 450-6101 (JP); OKABE, Hitoshi, Central Japan Railway Company, Nagoya-shi, Aichi 450-6101 (JP); MORIMOTO, Eiichi, Central Japan Railway Company, Nagoya-shi, Aichi 450-6101 (JP)
(74) Representative: Patentanwälte Eisele, Otten, Roth& Dobler
(86) International application number: JP0105428
(87) International publication number: WO02002383

(57) **Abstract**

To realize an accurate evaluation of the riding quality of a railway vehicle. In a riding quality simulation system (1), a control unit (60) controls a drive unit (50) such that vibrations along a plurality of axes arbitrarily selected among six axes can be simultaneously applied to a simulated passenger room (10) simulating an interior of a railway vehicle. The control unit (60) makes control in such a manner that, among an up-down component, a left-right component, and a forward-backward component of the vibration applied to the simulated passenger room (10), upper limits of vibration acceleration and frequency range of the forward-backward component are made smaller, thereby making higher upper limits of vibration acceleration and frequency range of the up-down and left-right components. According to this riding quality simulation system (1), when the vibration is separated into the up-down, left-right, and forward-backward components, an extremely bad riding quality can be reproduced with respect to each component, thereby allowing an accurate evaluation of the riding quality.

## Description

### TECHNICAL FIELD

The present invention relates to a riding quality simulation system used for accurately evaluating riding quality of a railway vehicle.

### BACKGROUND ART

In order to improve the riding quality of a railway vehicle, it is essential to accurately evaluate vibration and acceleration, which variously change depending on conditions of railroad tracks and vehicles, from the viewpoint of passengers. Such evaluation could be made by carrying out a running test, by means of an experimental vehicle, between runs by commercial vehicles. In this case, however, some problems arise as follows.

First of all, it is not easy to equalize the conditions of vehicles and tracks all the time running tests are performed, and reproducibility is not good. This fact results in a low reliability of evaluation. Also, it is difficult economically, and in view of efficiency as well, to shorten an interval of running tests or to carry out running tests a number of times. This fact results in a long period of development. Furthermore, it is not easy to modify conditions such as performance, properties, and the like.

On the other hand, there is known a system for simulating the riding quality without relying upon such running tests by use of experimental vehicles; that is, a simulation system by means of a simple four-axis vibration table for generating vibration along an up-down axis, a left-right axis, a forward-backward axis, and a roll axis (i.e., rotary motion about the forward-backward axis) (for example, refer to p.p. 113 to 116 of *Ergonomics,* vol. 33, 1997). This simulation system is capable of simultaneously generating vibrations along a plurality of axes arbitrarily selected among the four axes. According to such a simulation system, the aforementioned problems with the running of the experimental vehicles could be resolved.

However, in addition to vibration along these four axes, vibration along a yaw axis (i.e., rotary motion about the up-down axis) and a pitch axis (i.e., rotary motion about the forward-backward axis) also exists in the traveling of an actual railway vehicle, which cannot be reproduced by the aforementioned four-axis simulation system. Accordingly, evaluation of the riding quality by means of such a four-axis simulation system also lacks accuracy.

In this respect, it might be considered to employ a six-axis simulation system that is capable of generating vibration along the yaw axis and the pitch axis in addition to vibration along the aforementioned four axes. In this case, however, vibration performance in each of the up-down, left-right, and forward-backward directions is the same and, consequently, the frequency of the generated vibration becomes low, which does not agree with the actual condition. For this reason, simply using such a six-axis simulation system is not sufficient in view of the reproducibility of vibration, and it is still difficult to accurately evaluate the riding quality by means of the same.

In addition, the aforementioned four-axis simulation system only comprises the vibration table and seats disposed thereon, and because of such a simple composition, those who ride on the simulation system can not feel as if they were on board an actual railway vehicle.

### SUMMARY OF THE INVENTION

The present invention was made to solve the aforementioned problems; and more particularly, the object of the invention is to provide a riding quality simulation system which enables an accurate evaluation of the riding quality of a railway vehicle.

In order to attain this object, there is provided a riding quality simulation system for railway vehicle comprising:
a simulated passenger room simulating an interior of a railway vehicle;
a passenger room mounting table on which the simulated passenger room is mounted;
a base for supporting the passenger room mounting table;
six actuators respectively arranged along six sides of a virtual octahedron comprising, as its top face, a virtual triangle on the passenger room mounting table and, as its bottom face, a virtual triangle on the base, the six sides respectively connecting vertexes of the two virtual triangles, and the six actuators being rotatably attached, at their upper ends, to the passenger room mounting table and, at their lower ends, to the base;
a drive unit for driving each of the actuators; and
a control unit for controlling the drive unit such that oscillation or vibration in a low-frequency range along six axes, that is, an up-down axis, a left-right axis, a forward-backward axis, a yaw axis (i.e., rotary motion about the up-down axis), a pitch axis (i.e., rotary motion about the forward-backward axis), and a roll axis (i.e., rotary motion about the forward-backward axis), is applied to the simulated passenger room; wherein
control is made, by the control unit, in such a manner that, among an up-down, left-right, and forward-backward components of the vibration applied to the simulated passenger room, upper limits of vibration acceleration and frequency range of the forward-backward component are made smaller, thereby making higher upper limits of vibration acceleration and frequency range of the up-down and left-right components.

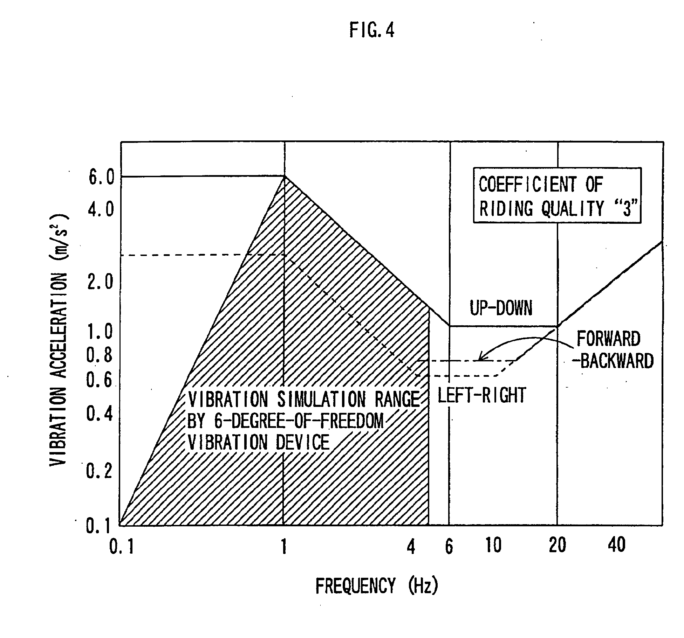

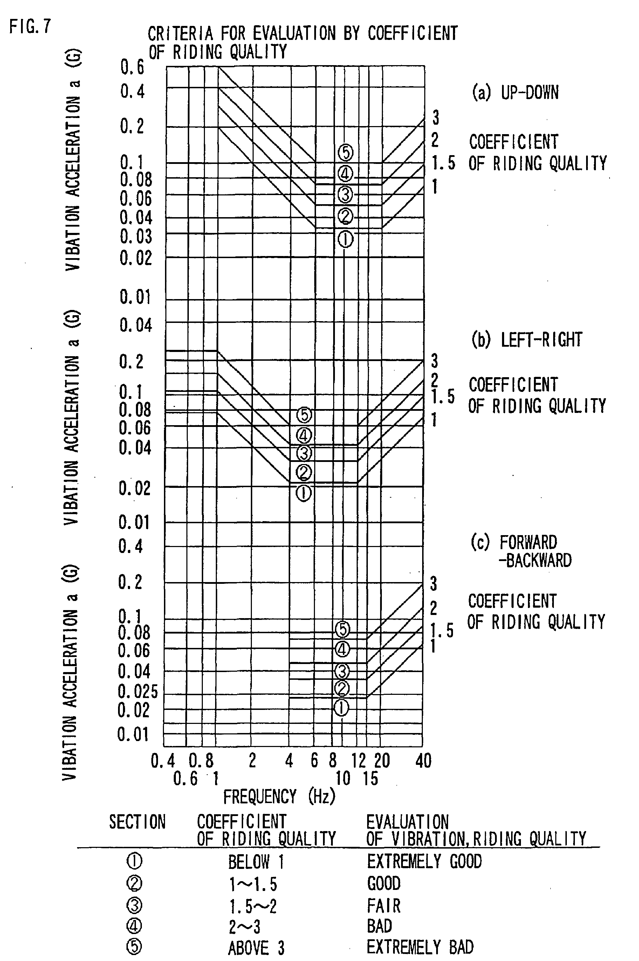

A graph drawn up on the basis of the results of a questionnaire survey for the riding quality conducted on an actual railway vehicle is shown in Fig. 7, where criteria for evaluation are given by means of coefficients of riding quality. In view of this Fig. 7, in order to obtain an extremely bad evaluation in the riding quality (that is, a coefficient of riding quality "3"), it is necessary to set the vibration acceleration and frequency range of the up-down and left-right components to be greater than those of the forward-backward component. However, in cases where the up-down, left-right and forward-backward components are all set in the same range, an upper limit of the frequency range is, for example, as shown in Fig. 4, approximately 5 Hz, by which it is insufficient to simulate sensible frequency range for human beings. It is preferable that the frequency range, particularly, those of the up-down and left-right components are set to be higher.

In the riding quality simulation system of the invention, the control unit controls the drive unit, thereby making possible a simultaneous application of vibrations along a plurality of axes arbitrarily selected among the six axes. The control unit makes control in such a manner that, among the up-down, left-right and forward-backward components of the vibration applied to the simulated passenger room, the upper limits of the vibration acceleration and the frequency range of the forward-backward component are made smaller in accordance with the actual condition, thereby making higher the upper limits of the vibration acceleration and the frequency range of the up-down and left-right components.

Use of such a riding quality simulation system results in an accurate evaluation of the riding quality because of the following effects: firstly, those who ride on the simulated passenger room simulating an interior of a railway vehicle can feel as if they were on board an actual railway vehicle; secondly, oscillation or vibration in a low frequency range along six axes is reproducible; and thirdly, when the vibration is separated into the up-down, left-right, and forward-backward components, an extremely bad riding quality can be reproduced with respect to each component.

In the riding quality simulation system of the invention, the control unit preferably controls the drive unit in such a manner that the upper limit of the vibration acceleration of the up-down component of the simulated passenger room becomes the greatest, and the upper limit of the vibration acceleration of the left-right component thereof becomes the next greatest. This is because, in view of Fig. 7, for an extremely bad evaluation in the riding quality (that is, a coefficient of riding quality "3") with respect to the left-right component, it is necessary that the vibration acceleration of the left-right component should be greater than that of the forward-backward component in a frequency range around 1 Hz. Accordingly, it is preferable to make control in such a manner that the upper limit of the vibration acceleration of the left-right component becomes the second greatest, next to that of the up-down component.

Now, in the riding quality simulation system of the invention, the actuators are suitable for applying oscillation or vibration in a low frequency range (for example, equal to and lower than 10 Hz). However, they are not suitable for applying vibration in a high frequency range (for example, equal to and higher than 10 Hz), in which a great number of vibrations are necessary to be generated per unit of time, since the structure of the system is too large. For this reason, a high-frequency vibration device is provided under the floor of the simulated passenger room, and high-frequency vibration is generated under the floor by means of the high-frequency vibration device. Actually, in this case, the entirety of the simulated passenger room is also vibrated with a high frequency and, therefore, vibration is preferably reproduced by means of the aforementioned actuators as far as the vibration is in a frequency range of which human beings are sensible.

Also, in the riding quality simulation system of the invention, the simulated passenger room is composed by simulating an interior of a railway vehicle and, consequently, those who ride on the simulated passenger room can feel as if they were on board an actual railway vehicle. In order to further enhance this effect, sounds and views which are likely to be heard, or seen through windows, during the running of a railway vehicle may be reproduced inside the simulated passenger room.

Furthermore, in the riding quality simulation system of the invention, the base may be designed to be movable in the left and right directions. In this case, lateral acceleration, which is applied to a railway vehicle while it is taking a curve, can be reproduced by moving the base in either of the left or right direction. In these manners, the riding quality of a railway vehicle can be evaluated more accurately.

### BRIEF DESCRIPTION OF DRAWINGS

Fig. 1 is a view showing the entire structure of a riding quality simulation system according to an embodiment of the invention;
Fig. 2 is an explanatory view showing how to dispose actuators;
Figs. 3A to 3E are explanatory views showing the motion of the actuators when vibration along each of six axes is applied to a simulated passenger room;
Fig. 4 is an explanatory view showing a vibration simulation range in cases where upper limits of vibration acceleration of each component are equally set;
Figs. 5A to 5C are explanatory views showing vibration simulation ranges in cases where upper limits of vibration acceleration of each component are variously set;
Fig. 6 is an explanatory view showing an example of procedure for carrying out a riding quality simulation test; and
Fig. 7 is a graph showing criteria for evaluation by means of coefficients of riding quality.

### PREFERRED EMBODIMENT OF THE INVENTION

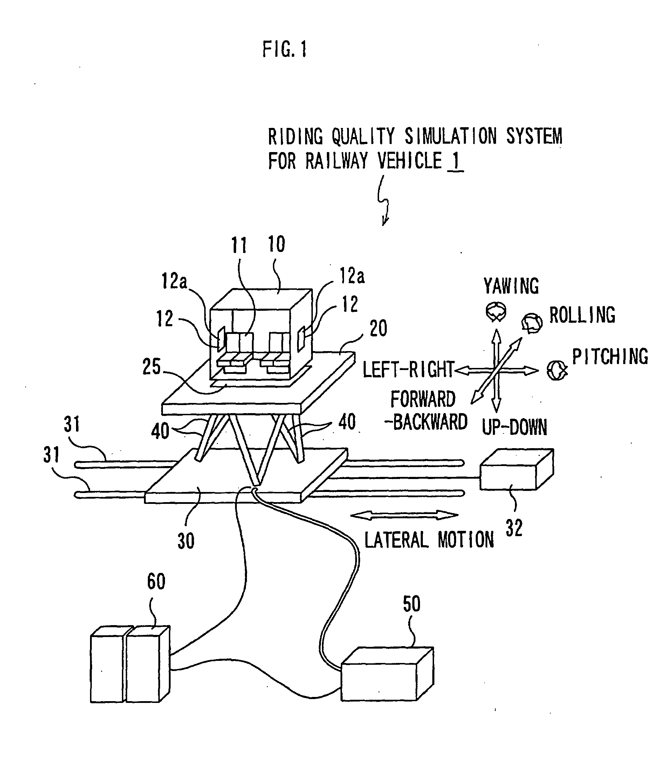

A preferred embodiment of the invention will now be described with reference to the drawings. Fig. 1 shows the entire structure of a riding quality simulation system according to this embodiment. In this embodiment, a riding quality simulation system 1 comprises a simulated passenger room 10, a passenger room mounting table 20, a base 30, six actuators 40, a drive unit 50, and a control unit 60.

The simulated passenger room 10 is a closed space imitating an interior of a railway vehicle. In the simulated passenger room 10, seats 11, which are the same as those of the railway vehicle, are arranged in the same manner as in the railway vehicle. Peripheral walls and a ceiling are also provided in the same manner as those of the railway vehicle. Each of lateral walls is provided with a simulated window 12, in which an imaging device 12a is installed. While a simulated running test is being performed, views seen from an actual railway vehicle during its traveling are projected on the imaging device 12a. Furthermore, speakers (not illustrated) are also installed inside the simulated passenger room 10 such that, while the simulated running test is being performed, sounds heard in an actual railway vehicle during its traveling are outputted from the speakers.

The passenger room mounting table 20 is a table on which the simulated passenger room 10 is to be mounted. The simulated passenger room 10 is mounted on the passenger room mounting table 20 via a high-frequency vibration table 25. The high-frequency vibration table 25 is a relatively small device that is capable of reproducing vibration along three axes, i.e., an up-down axis, a left-right axis, and a forward-backward axis, in a high-frequency range of at least 5 to 40 Hz.

The base 30 supports the passenger room mounting table 20 via six actuators 40. The base 30 is movable along two guide rails 31, 31 extending in the lateral direction. More specifically, the base 30 is moved by a laterally moving device 32, which is employed, during the simulated running test, to simulate running of a railway vehicle taking a curve.

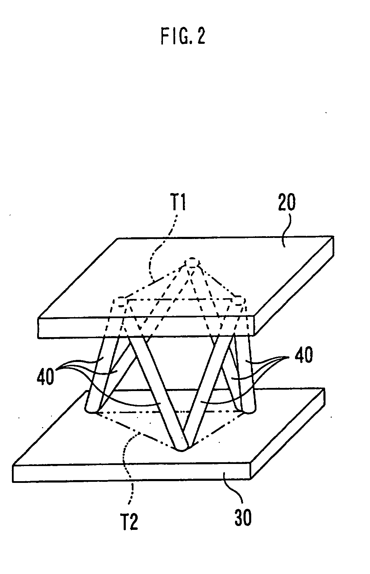

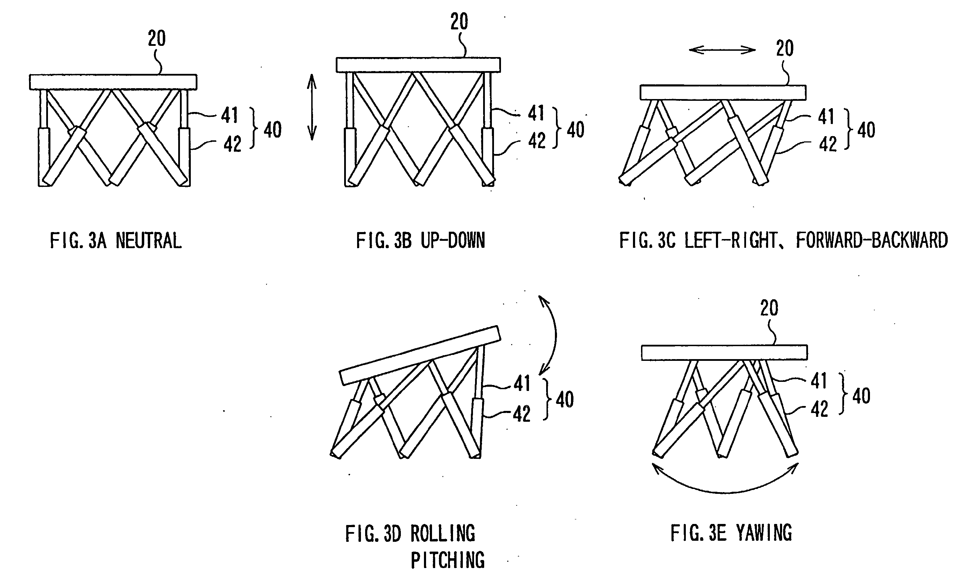

The six actuators 40 are, as shown in Fig. 2, respectively arranged along six sides of a virtual octahedron comprising, as its top face, a virtual triangle T1 on the passenger room mounting table 20 and, as its bottom face, a virtual triangle T2 on the base 30, the six sides respectively connecting vertexes of the virtual triangle T1 and those of the virtual triangle T2. Each of the actuators 40 is rotatably attached, at its upper end, to the undersurface of the passenger room mounting table 20 and, at its lower end, to the top face of the base 30. Each actuator 40 is a hydraulic servo actuator (that is, a vibration generation part having a piston with a hydraulic control mechanism) and, as shown in Fig. 3, is composed of a piston rod 41 for its upper part and a cylinder 42 for its lower part.

The drive unit 50 drives the actuators 40 by supplying each of the actuators 40 with hydraulic pressure generated by a hydraulic pump (not shown).

The control unit 60 controls the drive unit 50 such that the hydraulic pressure generated by the hydraulic pump of the drive unit 50 is adjusted to provide a pressure and a flow as required by each of the actuators 40, thereby activating each of the actuators 40. In this manner, the simulated passenger room 10 mounted on the passenger room mounting table 20 is subjected to oscillation or vibration in a low-frequency range along six axes, that is, an up-down axis, a left-right axis, a forward-backward axis, a yaw axis (i.e., rotary motion about the up-down axis), a pitch axis (i.e., rotary motion about the forward-backward axis), and a roll axis (i.e., rotary motion about the forward-backward axis).

Here, a unit for applying oscillation or vibration in a low-frequency range along six axes, including the six actuators 40, is referred to as a six-degree-of-freedom vibration device. As such a six-degree-of-freedom vibration device, a Stewart-type six-degree-of-freedom motion, which is conventionally known, may be employed.

Now, the operation of the riding quality simulation system 1 according to this embodiment is described with a focus on the six-degree-of-freedom vibration device. Figs. 3A to 3E are explanatory views showing the motion of the six actuators 40 when vibration along each of six axes is applied to the simulated passenger room. As shown in Figs. 3A to 3E, the control unit 60 controls the drive unit 50 so as to appropriately adjust the amount of protrusion of the piston rods 41 of the six actuators 40, thereby applying to the passenger room mounting table 20, and thus to the simulated passenger room 10, oscillation or vibration in a low-frequency range along the up-down axis, the left-right axis, the forward-backward axis, the roll axis, the pitch axis, or the yaw axis. Also, the control unit 60 allows a simultaneous application of oscillations or vibrations along a plurality of axes arbitrarily selected among the six axes, by controlling the drive unit 50 accordingly.

In cases where the control unit 60 controls the drive unit 50 in such a manner that an upper limit of the vibration acceleration of an up-down component of the simulated passenger room 10 becomes the greatest and an upper limit of the vibration acceleration of a left-right component thereof becomes the next greatest, upper limits of the vibration range of the up-down and left-right components of the simulated passenger room 10 are both enhanced, compared to cases where the control unit 60 controls the drive unit 50 in such a manner that an upper limit of the vibration acceleration of an up-down component of the simulated passenger room 10, an upper limit of the vibration acceleration of a left-right component thereof, and an upper limit of the vibration acceleration of a forward-backward component thereof are all made equal.

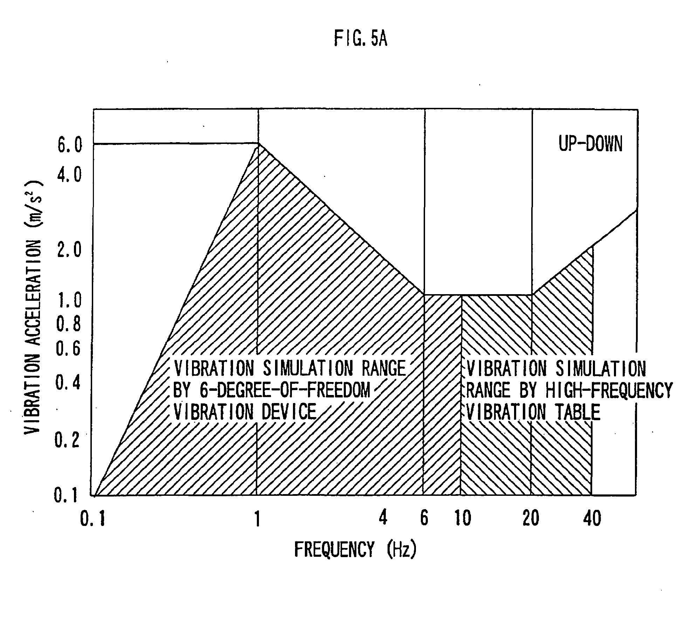

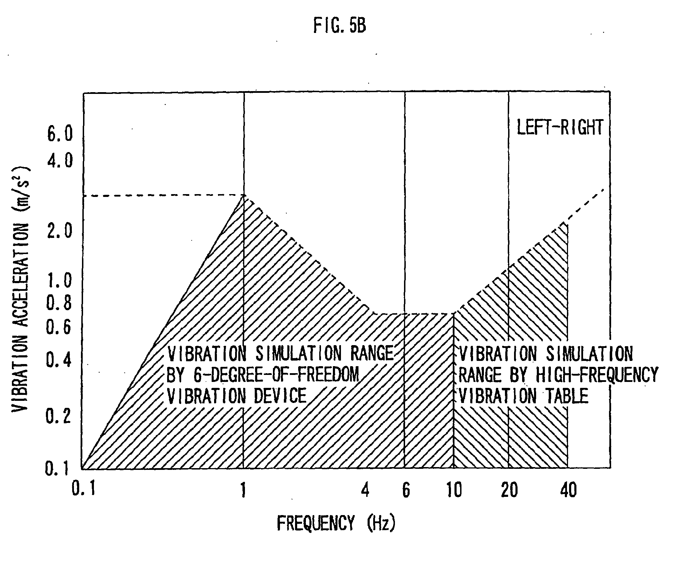

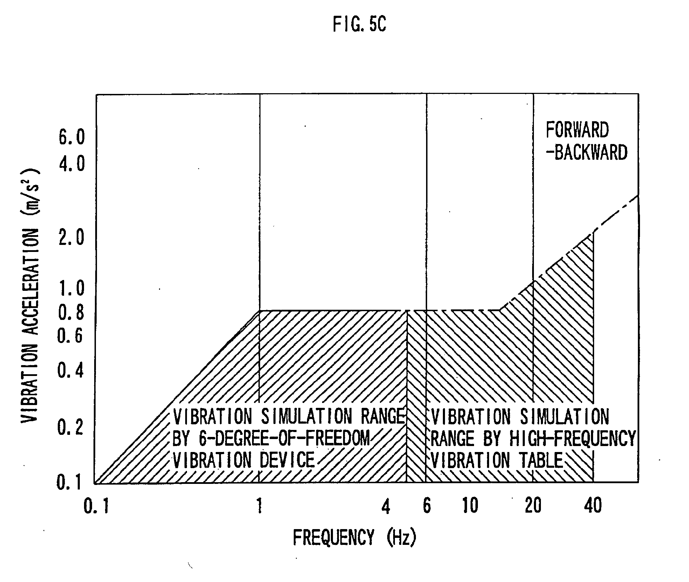

More specifically, when the vibration to which a railway vehicle is actually subjected is separated into each component, that is, an up-down component, a left-right component, and a forward-backward component, and control is made in such a manner that upper limits of the vibration acceleration of these components are all equal, a vibration simulation range is a region marked with oblique lines in a graph of Fig. 4. In Fig. 4, a solid line represents a correlation between the frequency of the up-down component and the vibration acceleration thereof when a coefficient of riding quality is "3" (refer to portion (a) in Fig. 7). Also, a broken line in Fig. 4 represents a correlation between the frequency of the left-right component and the vibration acceleration thereof when a coefficient of riding quality is "3" (refer to portion (b) in Fig. 7). Furthermore, an alternate-long-and-short dashed line represents a correlation between the frequency of the forward-backward component and the vibration acceleration thereof when a coefficient of riding quality is "3" (refer to portion (c) in Fig. 7). A solid line, a broken line and an alternate-long-and-short dashed line in Figs. 5A, 5B and 5C, which are all referred to below, also represent the same, respectively.

On the other hand, when control is made in such a manner that an upper limit of the vibration acceleration of the up-down component becomes the greatest and an upper limit of the vibration acceleration of the left-right component becomes the next greatest, vibration simulation ranges are regions marked with oblique lines in the graphs of Figs. 5A to 5C. More specifically, although an upper limit of the low-frequency range of the left-right component is kept to be 5 Hz, an upper limit of the low-frequency range of the up-down component and an upper limit of the low-frequency range of the left-right component are both enhanced to reach 10 Hz. In other words, by setting a maximum value of the vibration acceleration in each of the up-down, left-right and forward-backward components to be the value corresponding to the coefficient of riding quality "3" (that is, an extremely bad riding quality) as shown in portions (a) to (c), respectively, in Fig. 7, the frequency of a composite vibration acceleration of the up-down, left-right and forward-backward components, by vibration along six axes, can be made higher. On the contrary, in order to obtain a coefficient of riding quality "1" (that is, an extremely good riding quality), it is only necessary that the vibration acceleration and the frequency in each component should be reduced or made lower. Consequently, the six-degree-of-freedom vibration device of the riding quality simulation system 1 permits people who ride on the simulated passenger room 10 to arbitrarily evaluate the riding quality, from the evaluation of "an extremely good riding quality" to the evaluation of "an extremely bad riding quality," with respect to oscillation or vibration in a low-frequency range.

Also, vibration simulation ranges by means of the high-frequency vibration table 25 are also indicated in Figs. 5A, 5B and 5C.

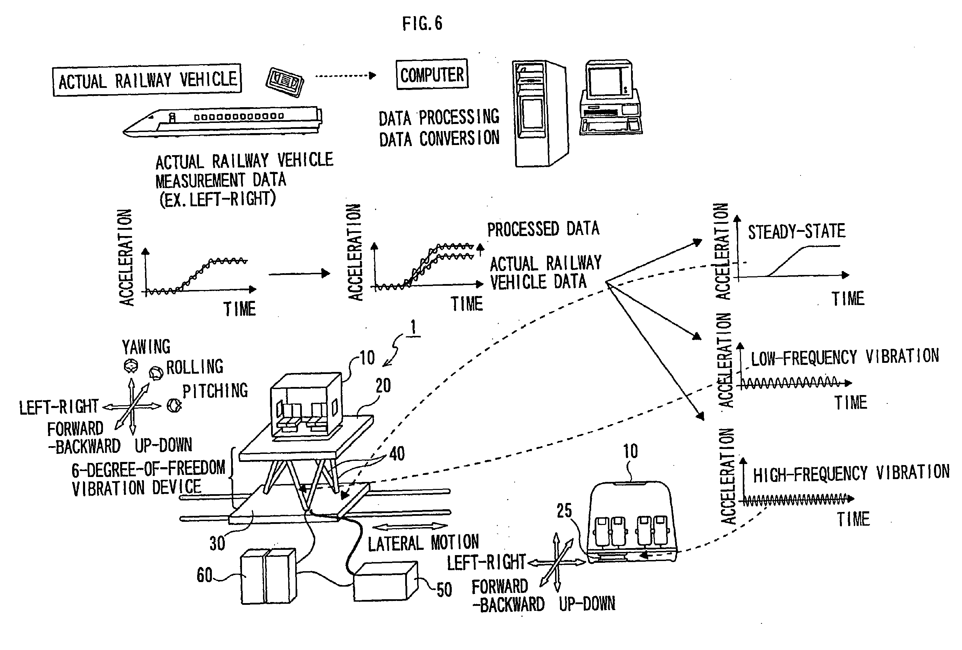

Now, an example of the procedure for carrying out a riding quality simulation test using the riding quality simulation system 1 according to the embodiment is described with reference to Fig. 6. Although Fig. 6 is only related to vibration in the left-right component, the same things can be said with respect to vibration in the other components. First of all, vibration in each of the up-down, left-right, and forward-backward components is measured on an actual railway vehicle, and the measured data are used as actual railway vehicle measurement data. Subsequently, the data are processed and converted with a computer to be divided into three kinds of accelerations, that is, lateral steady acceleration (i.e., lateral acceleration applied to a railway vehicle while it is taking a curve), low-frequency vibration acceleration, and high-frequency vibration acceleration. Then, the laterally moving device 32 moves the base 30 in either of the left or right direction on the basis of the data on the lateral steady acceleration, thereby applying a predetermined lateral acceleration to the simulated passenger room 10. Also, in the control unit 60, the data on the low-frequency vibration acceleration are integrated to obtain a velocity, and the velocity is further integrated to obtain an amount of displacement. The control unit 60 controls the drive unit 50 on the basis of the amount of displacement, thereby activating each of the actuators 40 and applying a composite low-frequency vibration along six axes to the simulated passenger room 10. Furthermore, the high-frequency vibration table 25 generates high-frequency vibration along three axes on the basis of the data on the high-frequency vibration acceleration, thereby applying a composite high-frequency vibration along three axes to the simulated passenger room 10. As a result, the simulated passenger room 10 of the riding quality simulation system 1 is subjected to vibrations in accordance with the actual railway vehicle measurement data.

As mentioned above, the riding quality simulation system 1 according to the embodiment provides the following merits: firstly, those who ride on the simulated passenger room simulating an interior of a railway vehicle can feel as if they were on board an actual railway vehicle; secondly, oscillation or vibration in a low-frequency range along six axes is reproducible; and thirdly, when the vibration is separated into the up-down, left-right and forward-backward components, an extremely bad riding quality can be reproduced with respect to each component, thereby allowing an accurate evaluation of the riding quality.

In addition, since the high-frequency vibration table 25 is set under the floor of the simulated passenger room 10 for the purpose of applying high-frequency vibration, vibration in a high-frequency range is also reproducible.

Furthermore, in the simulated passenger room 10, sounds that are likely to be heard during the traveling of a railway vehicle are outputted from the speakers (not shown), and views that are likely to be seen during the traveling of a railway vehicle are projected on the simulated windows 12. Consequently, those who ride on the simulated passenger room 10 to evaluate the riding quality can feel more strongly as if they were on board an actual railway vehicle, which makes it possible for them to evaluate the riding quality more accurately.

Moreover, since the lateral acceleration applied to an actual railway vehicle while it is taking a curve is simulated by moving the base 30 in the left or right direction, a further accurate evaluation of the riding quality of a railway vehicle can be made possible.

Needless to say, the invention is not restricted to the above described embodiment, and may be practiced or embodied in still other ways without departing from the subject matter thereof.

For example, in the above described embodiment, the base 30 is moved by means of the laterally moving device 32. Instead of such structure, the base 30 may be designed to be movable by itself in the left or right direction. In this case, the same effect as mentioned above can be achieved as well.

Also, according to the above described embodiment, the control unit 60 controls the drive unit 50 in such a manner that the upper limit of the vibration acceleration of the up-down component of the simulated passenger room 10 becomes the greatest, and the upper limit of the vibration acceleration of the left-right component becomes the second greatest. Instead of such a controlling manner, according to circumstances, control may be made in such a manner that the upper limit of the vibration acceleration of the forward-backward component becomes the second greatest.

Furthermore, in the above described embodiment, the actuators 40 are hydraulic servo actuators; however, the actuators 40 are not restricted to the same and, for example, electrically operated actuators may be employed instead.

### INDUSTRIAL APPLICABILITY

As mentioned above, by adopting a riding quality simulation system of the invention, the following effects can be achieved: firstly, those who ride on the simulated passenger room simulating an interior of a railway vehicle can feel as if they were on board an actual railway vehicle; secondly, oscillation or vibration in a low-frequency range along six axes is reproducible; and thirdly, when the vibration is separated into the up-down, left-right and forward-backward components, an extremely bad riding quality can be reproduced with respect to each component. In virtue of these effects, an accurate evaluation of the riding quality can be realized.

## Claims

1. A riding quality simulation system for railway vehicle comprising:
a simulated passenger room simulating an interior of a railway vehicle;
a passenger room mounting table on which the simulated passenger room is mounted;
a base for supporting the passenger room mounting table;
six actuators respectively arranged along six sides of a virtual octahedron comprising, as its top face, a virtual triangle on the passenger room mounting table and, as its bottom face, a virtual triangle on the base, the six sides respectively connecting vertexes of the two virtual triangles, and the six actuators being rotatably attached, at their upper ends, to the passenger room mounting table and, at their lower ends, to the base;
a drive unit for driving each of the actuators; and
a control unit for controlling the drive unit such that oscillation or vibration in a low-frequency range along six axes, that is, an up-down axis, a left-right axis, a forward-backward axis, a yaw axis (i.e., rotary motion about the up-down axis), a pitch axis (i.e., rotary motion about the forward-backward axis), and a roll axis (i.e., rotary motion about the forward-backward axis) is applied to the simulated passenger room; wherein
control is made, by the control unit, in such a manner that, among an up-down component, a left-right component, and a forward-backward component of the vibration applied to the simulated passenger room, upper limits of vibration acceleration and frequency range of the forward-backward component are made smaller, thereby making higher upper limits of vibration acceleration and frequency range of the up-down and left-right components.

2. The riding quality simulation system for railway vehicle according to claim 1, wherein the control unit controls the drive unit in such a manner that the upper limit of the vibration acceleration of the up-down component of the simulated passenger room becomes the greatest, and the upper limit of the vibration acceleration of the left-right component thereof becomes the next greatest.

3. The riding quality simulation system for railway vehicle according to either of claim 1 or 2, wherein the simulated passenger room is mounted on the passenger room mounting table via a high-frequency vibration device, the high-frequency vibration device being set under a floor of the simulated passenger room.

4. The riding quality simulation system for railway vehicle according to any of claims 1 to 3, wherein sounds and views which are likely to be heard, or seen through windows, during running of an actual railway vehicle can be reproduced inside the simulated passenger room.

5. The riding quality simulation system for railway vehicle according to any of claims 1 to 4, wherein the base is designed to be movable in the left or right direction.
